Europäisches Patentamt

European Patent Office

Office européen des brevets

(11) Numéro de publication: **0 294 273 B1**

## (12) FASCICULE DE BREVET EUROPEEN

(45) Date de publication de fascicule du brevet: **26.08.92**

(51) Int. Cl.5: **A47B 96/06**, H02G 3/26, B21D 22/04

(21) Numéro de dépôt: **88401271.7**

(22) Date de dépôt: **25.05.88**

(54) **Perfectionnements aux consoles métalliques.**

(30) Priorité: **26.05.87 FR 8707403**

(43) Date de publication de la demande:
**07.12.88 Bulletin 88/49**

(45) Mention de la délivrance du brevet:
**26.08.92 Bulletin 92/35**

(84) Etats contractants désignés:
**AT BE CH DE ES GB GR IT LI LU NL SE**

(56) Documents cités:
**FR-A- 384 449**
**FR-A- 2 371 252**
**FR-A- 2 515 277**

(73) Titulaire: **CONSTRUCTIONS ELECTRIOUES DE LA SEINE**
**26 Rue Jean-Baptiste Potin**
**F-92130 Issy les Molineaux(FR)**

(72) Inventeur: **Launay, Guy**
**Rue Haute Semur en Vallon**
**F-72390 Dollon(FR)**
Inventeur: **Viardin, Jean**
**20, rue Joliot Curie**
**F-72110 Bonnetable(FR)**

(74) Mandataire: **Behaghel, Pierre et al**
**CABINET PLASSERAUD 84 rue d'Amsterdam**
**F-75009 Paris(FR)**

# Description

L'invention est relative aux consoles constituées par des tôles perforées et pliées et destinées à être montées en porte-à-faux horizontal sur des montants, pendards ou autres supports verticaux qui seront désignés ci-après, pour simplifier, comme étant des "montants", le montage de chaque console sur le montant considéré étant assuré à l'aide d'au moins un sytème de fixation, de préférence du type boulon-écrou, traversant horizontalement successivement un trou évidé dans le montant et un trou évidé dans la console.

L'invention vise plus particulièrement, parce que c'est dans leur cas que son application semble devoir offrir le plus d'intérêt, mais non exclusivement, le cas où les consoles sont destinées à supporter des chemins de câbles, c'est-à-dire des gouttières métalliques contenant des câbles électriques ou analogues.

Dans les modes de réalisation connus des consoles du genre en question, les charges susceptibles d'être supportées par les consoles sont limitées dans le pratique par la résistance aux déformations et déchirures présentée par les bords des trous évidés dans ces consoles et traversés par les systèmes de fixation.

Pour augmenter cette résistance, il a déjà été proposé de renforcer lesdits bords en les repliant perpendiculairement au plan de la tôle selon des collets.

Cette mesure permet d'accroître la charge maximum susceptible d'être supportée par les consoles considérées, toutes choses égales par ailleurs, c'est-à-dire en particulier pour une épaisseur de tôle donnée.

L'invention a pour but, surtout, d'augmenter encore la résistance à la déformation des bords des trous de fixation des consoles lorsque ces consoles sont chargées, toutes choses égales par ailleurs.

A cet effet les consoles du genre en question selon l'invention comprennent encore au moins un trou de fixation dont le bord est replié selon un collet cylindrique faisant saillie sur la tôle et elles sont essentiellement caractérisées en ce qu'elles comprennent en outre au moins un pan de tôle évidé par au moins une perforation propre à recevoir quasi-jointivement un tel collet, un tel pan étant rabattu à plat contre chaque collet de façon telle que ce collet soit entouré par le bord d'une telle perforation.

Dans des modes de réalisation préférés, on a recours en outre à l'une et/ou à l'autre des dispositions suivantes :
- la console comprend une âme verticale dans laquelle sont évidés deux trous de fixation, âme bordée par au moins une aile perpendiculaire à celle-ci et le pan de tôle rabattu est unique et formé par un prolongement de l'âme, chaque aile étant interrompue au droit de la racine de ce prolongement pour permettre son rabattement,
- la console comprend une âme verticale dans laquelle sont évidés deux trous de fixation, âme bordée par deux ailes perpendiculaires à celle-ci et les deux pans de tôle rabattus sont au nombre de deux et formés respectivement par les extrémités, des ailes, situées respectivement de part et d'autre des trous de fixation,
- la console comprend une âme horizontale bordée par deux ailes verticales parallèles évidées chacune par au moins un trou de fixation et les pans de tôle rabattus sont au nombre de deux et formés respectivement par des prolongements des deux ailes, l'âme étant interrompue au droit des racines de ces prolongements pour permettre leur rabattement,
- chaque collet est entouré jointivement par le bord de peforation correspondant,
- les collets sont formés après rabattement des pans, à l'intérieur même des peforations, de ces pans, dont les bords sont destinés à coiffer lesdits collets.

L'invention comprend, mises à part ces dispositions principales, certaines autres dispositions qui s'utilisent de préférence en même temps et dont il sera plus explicitement question ci-après.

Dans ce qui suit, l'on va décrire trois modes de réalisation préférés de l'invention en se référant au dessin ci-annexé d'une manière bien entendu non limitative.

Les figures 1 et 2, de ce dessin, montrent respectivement en élévation et en coupe horizontale selon II-II, figure 1, une portion d'une console renforcée selon l'invention, juxtaposée à un montant perforé de support en leur position mutuelle de réception de systèmes boulons-écrous de fixation.

Les figures 3 et 4 montrent respectivement en élévation et en coupe partielle verticale selon IV-IV, figure 3, une autre console renforcée selon l'invention.

Les figures 5 et 6 montrent, respectivement en vue perspective et en coupe horizontale, encore une autre console renforcée selon l'invention et montée sur un montant perforé de support.

Dans les deux premiers modes de réalisation, la console 1 est constituée par un profilé métallique en U,
- dont le fond plat ou âme 2, orienté verticalement, présente la forme d'un trapèze isocèle allongé selon la direction de son axe de symétrie,
- et dont les deux ailes plates 3 sont perpendiculaires au fond 2 et ont une hauteur constante.

Ce profilé est avantageusement constitué en acier galvanisé, ou encore en acier inoxydable, en aluminium, en alliage d'aluminium ...

Il est généralement formé par pliage d'une tôle de 1 à 4 mm d'épaisseur, et est éventuellement revêtu d'une couche protectrice de peinture ou autre rapportée sur lui avant ou après le pliage.

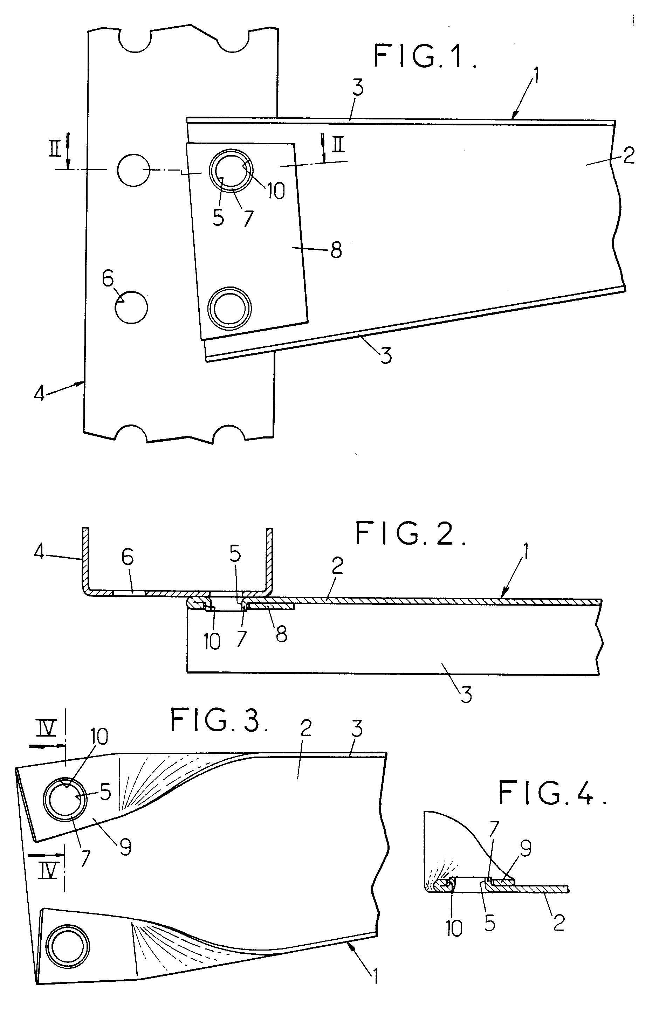

La console 1 doit pouvoir être fixée sur un montant perforé 4 (figures 1 et 2) à l'aide de deux systèmes boulons-écrous ou analogues (rivets, goupilles, ...) propres à coopérer avec respectivement deux trous superposés 5 évidés dans l'âme 2 de la console et respectivement deux trous superposés 6 du montant placé horizontalement en regard des trous 5.

Ces différents trous 5 et 6 sont généralement circulaires, mais ils pourraient également être allongés.

Les emplacements des trous 5 de la console sont choisis de façon telle qu'après montage de celle-ci sur le montant, son aile 3 supérieure soit horizontale, ce qui lui permet de supporter des chemins de câbles, comme bien connu.

Ce sont les bords des trous 5 de la console que l'on se propose de renforcer selon l'invention, car c'est leur résistance à la déformation qui limite la charge supportable par la console.

A cet effet l'on a recours à l'ensemble des deux dispositions suivantes :

- on replie le bord de chaque trou 5 de façon à former un collet ou cheminée cylindrique 7 faisant saillie horizontalement sur l'âme verticale 2,
- on prévoit dans la console, à proximité des collets 7, un pan 8,9 préalablement évidé par au moins une perforation 10 propre à être traversée quasi-jointivement par les collets 7 et l'on rabat ce pan à 180° contre l'âme 2 de façon telle que chaque collet 7 soit en définitive entouré par le bord d'une perforation 10.

Dans un premier mode de réalisation illustré sur les figures 1 et 2, le pan 8 destiné à être rabattu contre l'âme 2 forme initialement un prolongement de cette âme et les ailes 3 de la console sont alors "grugées" ou supprimées sur toute la longueur de ce prolongement de façon à rendre possible son rabattement.

C'est en sa position rabattue que ledit pan 8 est illustré sur les figures 1 et 2.

On voit que, pour cette position rabattue, du pan 8, chaque collet 7 est entouré d'une façon quasijointive par le bord d'une perforation 10.

En d'autres termes, chaque collet 7 est alors emprisonné ou "enchâssé" dans la tôle constitutive du pan rabattu, laquelle tôle forme pour ce collet une armature de renfort très résistante aux déformations.

La résistance des collets 7 aux déformations dues aux surcharges appliquées sur la console 1 est donc fortement augmentée.

L'expérience a ainsi montré que la charge à partir de laquelle la console commence à céder est d'environ 30 % plus élevée pour une console comportant application du perfectionnement décrit ci-dessus (collets enchâssés) et constituée en une tôle dont l'épaisseur est seulement de 1,7 mm que pour une console différant de la précédente uniquement par une épaisseur de tôle un peu plus forte, savoir de 2 mm et par l'absence d'enchâssement des collets bordant les trous de fixation. La charge indiquée est également plus élevée pour la première console ci-dessus que pour une console différant de celle-ci uniquement par une épaisseur de tôle de 3 mm, c'est-à-dire beaucoup plus forte, et par l'absence de collets de renforcement.

Dans la variante représentée sur les figures 3 et 4, le renfort des collets est encore assuré par des pans de tôle perforés et rabattus, mais ces pans ne proviennent plus d'un prolongement de l'âme de la console : ils sont constitués par les extrémités 9 elles-mêmes, des ailes de la console, qui sont situées respectivement au-dessus et au-dessous des trous 5, ces extrémités étant rabattues par flexion et torsion contre l'âme 2 de façon à coiffer les collets par les bords 10 de perforations préalablement pratiquées dans lesdites extrémités.

Cette variante présente sur la précédente l'avantage de préserver la continuité des fibres métalliques de la console tout au long de ses ailes 3 ou de sa section transversale, en évitant la création de points anguleux dans le zones où les pans à rabattre sont raccordés au restant de la console.

Elle présente également l'avantage de permettre des montages de la console sur le montant selon deux sens distincts correspondant tous les deux à la même aile supérieure 3.

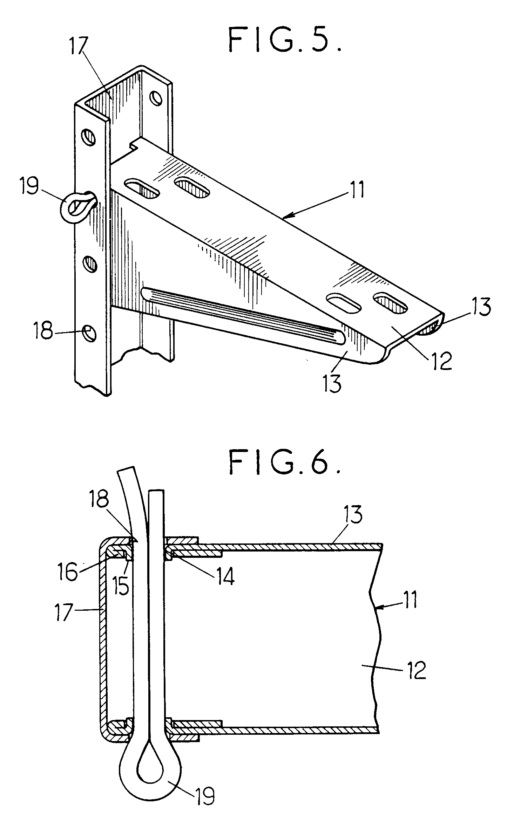

La console 11 illustrée sur les figures 5 et 6 est encore constituée comme les précédentes par un profilé métallique en U, mais son âme ou fond plat 12 est rectangulaire et horizontale et elle est bordée par deux ailes verticales 13 de forme trapézoïdale s'étendant vers le bas.

Chacune de ces ailes est perforée, au voisinage de la grande base du trapèze et de l'âme 12, par au moins un trou 14, coaxial à un trou semblablement perforé dans l'autre aile et chacun de ces trous 14 a son bord replié selon un collet 15.

Les pans rabattus 16 destinés à enchâsser les collets 15 sont à l'origine constitués par des prolongements des ailes 13, l'âme 12 étant interrompue ou "grugée" au droit des racines de ces prolongements pour permettre leur rabattement.

Le montant de support 17 est ici un profilé en U propre à chevaucher la console 11 et ses ailes sont évidées par des trous de montage 18.

Le système de fixation qui a été adopté pour lesdites figures 5 et 6 est une goupille 19 traversant successivement deux trous 18 du support 17 et deux trous 13, à bords renforcés, de la console 11.

En suite de quoi, et quel que soit le mode de réalisation adopté, on dispose d'une console dont la constitution et les avantages --notamment l'augmentation considérable de la résistance à la déformation sous charge-- résultent suffisamment de ce qui précède.

La fabrication des consoles renforcées ci-dessus décrites est relativement simple du fait qu'elle met en oeuvre des déformations de pièces uniques : il est donc inutile de prélever des éléments provenant de plusieurs sources pour les assembler entre eux.

Si les collets 7, 15 sont réalisés avant le rabattement des pans de renforcement 8,9,16, il peut arriver qu'un tel rabattement présente quelques difficultés, en particulier si la longueur axiale d'un collet est relativement importante, si l'arête autour de laquelle est opéré le rabattement du pan de renforcement destiné à coiffer un tel collet est proche de ce dernier et/ou si la surface dégagée par la perforation d'un pan dans laquelle doit être introduit un collet n'est supérieure que de peu à la section droite hors tout dudit collet.

C'est pourquoi l'on préfère commencer par rabattre contre l'âme de la console les pans de renforcement qui ont été préalablement perforés : les collets destinés à être introduits dans ces perforations sont ensuite réalisés directement à l'intérieur desdites peforations, notamment par poinçonnage, ce qui se traduit généralement par un contact jointif entre chaque collet et le bord de la perforation dans lequel il est formé, tout au long de ce bord.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où la console comprendrait une aile unique perpendiculaire à son âme, cette console se présentant alors sous la forme d'une cornière,
- celles où, le pan rabattu de renforcement étant constitué initialement par un prolongement de l'âme de la console, les ailes de cette console seraient interrompues non pas au niveau de l'arête de rabattement de ce pan, comme dans la réalisation illustrée sur les figures 1 et 2, mais un peu plus loin vers le milieu de la console, pour permettre le montage de celle-ci sur le montant selon deux sens distincts correspondant tous les deux à la même aile supérieure,

- et celles où les trous évidés dans la console présenteraient un bord de forme autre que circulaire, ce bord étant par exemple allongé, comme divulgué par le brevet France n° 82 11508.

**Revendications**

1. Console (1, 11) constituée par une tôle perforée et pliée et destinée à être montée en porte-à-faux horizontal sur un montant (4, 17), à l'aide d'au moins un système de fixation, de préférence du type boulon-écrou, traversant horizontalement successivement un trou (6, 18) évidé dans le montant et un trou (5, 14) évidé dans la console, le bord de ce dernier trou (5, 14) étant replié selon un collet cylindrique (7, 15) faisant saillie sur la tôle, caractérisée en ce qu'elle comprend au moins un pan de tôle (8, 9, 16) évidé par au moins une perforation propre à recevoir quasi-jointivement un tel collet (7, 15), un tel pan étant rabattu à plat directement contre chaque collet de façon telle que ce collet soit entouré par le bord (10) d'une telle perforation.

2. Console selon la revendication 1, comprenant une âme verticale (2) dans laquelle sont évidés deux trous de fixation (5), âme bordée par au moins une aile (3) perpendiculaire à celle-ci, caractérisée en ce que le pan de tôle rabattu (8) est unique et formé par un prolongement de l'âme, chaque aile étant interrompue au droit de la racine de ce prolongement pour permettre son rabattement.

3. Console selon la revendication 1, comprenant une âme verticale (2) dans laquelle sont évidés deux trous de fixation (5), âme bordée par deux ailes (3) perpendiculaires à celle-ci, caractérisée en ce que les pans de tôle rabattus (9) sont au nombre de deux et sont formés respectivement par les extrémités, des ailes, situées respectivement de part et d'autre des trous de fixation.

4. Console selon la revendication 1, comprenant une âme horizontale (12) bordée par deux ailes verticales (13) parallèles évidées chacune par au moins un trou de fixation (14), caractérisée en ce que les pans de tôle rabattus (16) sont au nombre de deux et formés respectivement par des prolongements des deux ailes, l'âme étant interrompue au droit des racines de ces prolongements pour permettre leur rabattement.

5. Console selon l'une quelconque des précédentes revendications, caractérisée en ce que chaque collet (7, 15) est entouré jointivement par le bord (10) de perforation correspondant.

6. Procédé de fabrication d'une console selon l'une quelconque des précédentes revendications, caractérisé en ce que chaque collet (7, 15) est formé après rabattement du pan (8,9,16) correspondant, à l'intérieur même de la perforation, de ce pan, dont le bord (10) est destiné à coiffer jointivement ledit collet.

**Claims**

1. Bracket (1, 11) made from a perforated folded metal sheet and intended to be mounted cantilevered horizontally and on an upright (4, 17), by means of at least one fixing system, preferably of the nut and bolt type, passing horizontally in succession through a hole (6, 18) cut in the upright and a hole (5, 14) cut in the bracket, the rim of the latter hole (5, 14) being folded into a cylindrical collar (7, 15) projecting on the metal sheet, characterised in that it comprises at least one sheet metal panel (8, 9, 16) with at least one perforation cut in it suitable for receiving, quasi-contiguously, such a collar (7, 15), such a panel being folded back flat directly against each collar so that this collar is surrounded by the rim (10) of such a perforation.

2. Bracket according to claim 1, comprising a vertical web (2) in which two fixing holes (5) are cut, web bordered by at least one flange (3) at right angles to it, characterised in that there is only one folded sheet metal panel (8) formed by an extension of the web, each flange being interrupted in line with the root of this extension to allow it to be folded back.

3. Bracket according to claim 1, comprising a vertical web (2) in which two fixing holes (5) are cut, web bordered by two flanges (3) at right angles to it, characterised in that the folded sheet metal panels (9) are two in number and are formed respectively by the ends of the flanges situated respectively on each side of the fixing holes.

4. Bracket according to claim 1, comprising a horizontal web (12) bordered by two vertical parallel flanges (13) each with at least one fixing hole (14) cut in it, characterised in that the folded sheet metal panels (16) are two in number and are formed respectively by extensions of the two flanges, the web being interrupted in line with the roots of the extensions to allow them to be folded back.

5. Bracket according to any one of the preceding claims, characterised in that each collar (7, 15) is surrounded contiguously by the corresponding perforation rim (10).

6. Method of manufacturing a bracket according to any one of the preceding claims, characterised in that each collar (7, 15) is formed after the folding back of the corresponding panel (8, 9, 16), in the very inside of the perforation in this panel, the rim (10) of which is designed to fit contiguously over the said collar.

**Patentansprüche**

1. Kragträger (1, 11) aus gelochtem und gebogenem Blech zur freikragenden horizontalen Montage an einer Stütze (4, 17) mit Hilfe zumindest eines Befestigungssystemes, vorzugsweise vom Typ Schraube/Mutter, welches hintereinander ein in der Stütze ausgespartes Loch (6, 18) und ein im Kragträger ausgespartes Loch (5, 14) horizontal durchsetzt, wobei der Rand des letzteren Loches (5, 14) als zylindrischer Flansch (7, 15) umgebördelt ist und über das Blech vorsteht, dadurch gekennzeichnet, daß der Kragträger zumindest eine Blechlasche (8, 9, 16) aufweist, in der zumindest eine Durchbrechung ausgespart ist, welche in der Lage ist, einen derartigen Flansch (7, 15) gleichsam eng angrenzend aufzunehmen, wobei auf jeden Flansch eine solche Lasche direkt flach umgeschlagen ist, so daß dieser Flansch vom Rand (10) einer derartigen Durchbrechung umgeben ist.

2. Kragträger nach Anspruch 1, mit einem vertikalen Stegblech (2), in dem zwei Befestigungslöcher (5) ausgespart sind, wobei das Stegblech am Rand von zumindest einem dazu senkrecht verlaufenden Seitenblech (3) eingefaßt ist, dadurch gekennzeichnet, daß die umgeschlagene Blechlasche (8) einstückig aus einer Verlängerung des Stegbleches gebildet ist, wobei jedes Seitenblech am Ansatzort dieser Verlängerung unterbrochen ist, um deren Umschlagen zu ermöglichen.

3. Kragträger nach Anspruch 1, mit einem vertikalen Stegblech (2), in dem zwei Befestigungslöcher (5) ausgespart sind, wobei das Stegblech von zwei dazu senkrecht verlaufenden Seitenblechen (3) eingefaßt ist, dadurch gekennzeichnet, daß zwei umgeschlagene Blechlaschen (9) vorgesehen und aus den Enden der Seitenbleche gebildet sind, welche zu beiden Seiten der Befestigungslöcher liegen.

4. Kragträger nach Anspruch 1, mit einem horizontalen Stegblech (12), das von zwei vertikalen, parallelen Seitenblechen (13) eingefaßt ist, in denen je zumindest ein Befestigungsloch (14) ausgespart ist, dadurch gekennzeichnet, daß zwei umgeschlagene Blechlaschen (16) vorgesehen und aus Verlängerungen der beiden Seitenbleche gebildet sind, wobei das Stegblech am Ansatzort dieser Verlängerungen unterbrochen ist, um deren Umschlagen zu gestatten.

5. Kragträger nach einem der vorhergehenden Ansprüche, dadurch gekennzeichnet, daß jeder Flansch (7, 15) vom Rand (10) der entsprechenden Durchbrechung eng umgeben ist.

6. Verfahren zum Herstellen eines Kragträgers nach einem der vorhergehenden Ansprüche, dadurch gekennzeichnet, daß jeder Flansch (7, 15) nach dem Umschlagen der entsprechenden Lasche (8, 9, 16) direkt im Inneren der Durchbrechung dieser Lasche geformt wird, deren Rand (10) dazu bestimmt ist, diesen Flansch eng zu überdecken.

FIG.1.

FIG.2.

FIG.3.

FIG.4.

7

# FIG.5.

# FIG.6.